# EUROPEAN PATENT APPLICATION

(11) **EP 4 770 114 A2**
(43) Date of publication of application: **01.07.2026**
(21) Application number: 25223849.8
(22) Date of filing: 16.12.2025
(51) Int. Cl.: H04Q 11/00, H04B 10/073

(54) **LOOPBACK TEST SYSTEM FOR NETWORK INTEGRATED EQUIPMENT RACKS**

(30) Priority: 31.12.2024 US 202463740584 P
(71) Applicant: Corning Research & Development Corporation, Corning, New York 14831 (US)
(72) Inventor: BUFF, Scott Eaker, North Carolina, 28602 (US); FAULKNER, Michael Todd, North Carolina, 28630 (US); HEFNER, James Nathaniel, Wisconsin, 53129 (US)
(74) Representative: Reddie & Grose LLP

(57) **Abstract**

A loopback test system and method of using the system to test optical connectivity of an equipment rack including an optical shuffle device and at least one server, with each server having server ports. The loopback test system includes a plurality of loopback optical interfaces that are each coupled to a respective network-side optical interface or a respective spare optical interface of the optical shuffle device. Shuffle optical waveguides of the optical shuffle device and loopback optical waveguides of the loopback test system cross-connect each server port in a first subset of the server ports to a respective server port in a second subset of the server ports, with at least one of the cross-connections passing through a spare optical interface and two of the network-side optical interfaces.

## Description

### Related Applications

This application claims the benefit of priority of U.S. Provisional Application Serial No. 63/740,584 filed on December 31, 2024, the content of which is relied upon and incorporated herein by reference in its entirety.

### Technical Field

This disclosure relates generally to optical connectivity, and more particularly to a system and method for testing fiber optic connectivity of an integrated equipment rack.

### Background

Optical fibers are useful in a wide variety of applications, including the information technology (IT) industry for transmitting data. Benefits of optical fibers include wide bandwidth and low noise operation. Traditional optical fibers include a solid core and a solid cladding that surrounds the core. The core and cladding are typically made of fused silica doped so that the core has a higher index of refraction than the cladding. The core and cladding of the optical fiber are thereby configured to define an optical waveguide that generally confines optical beams propagating through the optical fiber to a region of the optical fiber within and immediately adjacent to the core.

Continued growth of the Internet has led businesses and other organizations to develop large scale data centers for organizing, processing, storing, and disseminating large amounts of data. More recently, the emergence of artificial intelligence (Al) and machine learning applications has created a demand for data centers that provide large computer clusters of increasing size. These computer clusters are often implemented in hyperscale data centers that include hundreds or thousands of interconnected data processing units (e.g., graphics processing units (GPUs)) to provide the necessary computing power. The data processing units of the computer cluster are typically connected by a data network that provides highspeed/high-bandwidth communication between any two data processing units of the computer cluster.

By way of example, a typical computer cluster configured to support an Al system may comprise a plurality of scalable units (e.g., 32 scalable units) each including a plurality of servers (e.g., 32 servers), with each server including multiple data processing units (e.g., 8 GPUs). Thus, a typical computer cluster can easily include 8,192 or more data processing units. The data network that connects these data processing units may include two switching layers in a spine-leaf configuration. In this type of network, each data processing unit may be operatively coupled to a leaf switch by one or more optical fibers, and each leaf switch may be operatively coupled to one or more spine switches by additional optical fibers. A typical scalable unit configuration may include four servers being placed in each of eight server racks (32 servers total), and eight leaf switches placed in a single leaf switch rack. The equipment racks may be arranged in a row, with the leaf switch rack located in the middle of the row to minimize the mean distance between the leaf switches and the servers.

Each leaf switch in the above exemplary computer cluster may include a large number of optical ports, e.g., 64 optical ports. A portion of the leaf switch ports (e.g., 32 ports) may be operatively coupled to a like number of server ports each corresponding to a respective data processing unit. Another portion of the leaf switch ports (e.g., the other 32 ports) may be operatively coupled to a like number switch ports corresponding to one or more spine switches. In a conventional data center, each data processing unit port may be connected to a respective leaf switch port in one of the leaf switches by a connectorized optical cable. Thus, for the example mentioned above involving 32 servers each having eight data processing units (and, therefore, 8 x 32 data processing unit ports) and eight leaf switches each having 32 ports that may be operatively coupled to the data processing unit ports, cabling up a single scalable unit may require an installer to install 256 optical cables between the server racks and the leaf switch rack, and another 256 optical cables between the leaf switch rack and one or more spine switch racks. A computer cluster including 32 scalable units would thus require the design and installation of at least 16,384 optical cables, not including any optical cables required to provide connections between spine switches or for redundancy. Installing this number of optical cables contributes greatly to the speed and cost of deploying new hyperscale data centers in terms of both the time required before the computer cluster is operational and the cost of labor.

Thus, there is a need in the fiber optic industry for improved systems and methods of connecting nodes in data centers using optical fibers.

### Summary

In one aspect of the disclosure, a loopback test system is disclosed. The loopback test system includes a plurality of loopback optical interfaces, a plurality of first loopback optical waveguides, a plurality of second loopback optical waveguides, and a plurality of third loopback optical waveguides. The plurality of loopback optical interfaces includes a plurality of network loopback optical interfaces and at least one spare loopback optical interface. Each of the plurality of first loopback optical waveguides has one end operatively coupled to one of the network loopback optical interfaces and another end operatively coupled to another of the network loopback optical interfaces. Each of the plurality of second loopback optical waveguides includes opposite ends operatively coupled to one of the network loopback optical interfaces that is different than any of the network loopback optical interfaces to which the first loopback optical waveguides are operatively coupled such that each second loopback optical waveguide is configured to receive optical signals from the network loopback optical interface to which the second loopback optical waveguide is operatively coupled and direct the optical signals back to the same network loopback optical interface. Each of the plurality of third loopback optical waveguides includes one end operatively coupled to a spare loopback optical interface of the at least one spare loopback optical interface and another end operatively coupled to one of the network loopback optical interfaces to which at least one of the second loopback optical waveguides is operatively coupled.

In one embodiment of the disclosed loopback test system, each of the network loopback optical interfaces to which the first loopback optical waveguides are operatively coupled may be associated with twenty-four of the first loopback optical waveguides, each network loopback optical interface to which any of the second loopback optical waveguides are operatively coupled may be associated with eight of the second loopback optical waveguides and eight of the third loopback optical waveguides, and each spare loopback optical interface of the at least one spare loopback optical interface may be associated with eight of the third loopback optical waveguides.

In another embodiment of the disclosed loopback test system, the plurality of loopback optical interfaces may include eight of the network loopback optical interfaces to which the first loopback optical waveguides are operatively coupled, four of the network loopback optical interfaces to which the second loopback optical waveguides are operatively coupled, and four of the spare loopback optical interfaces.

In another embodiment of the disclosed loopback test system, the loopback test system may include a plurality of loopback test subassemblies each having three of the network loopback optical interfaces and one of the at least one spare loopback optical interface.

In another embodiment of the disclosed loopback test system, each loopback optical interface of the plurality of loopback optical interfaces may include an optical connector.

In another embodiment of the disclosed loopback test system, the system may further include at least one jumper cable assembly. In this embodiment, each of the at least one jumper cable assemblies may include at least some of the first loopback optical waveguides and the network loopback optical interfaces that are operatively coupled to the ends of the included first loopback optical waveguides.

In another embodiment of the disclosed loopback test system, the system may further include at least one loopback cable assembly. In this embodiment, each loopback cable assembly of the at least one loopback cable assembly may include at least some of the second loopback optical waveguides, at least some of the third loopback optical waveguides, and the loopback optical interfaces that are operatively coupled to the ends of the at least some of the second loopback optical waveguides and the at least some of the third loopback optical waveguides.

In another embodiment of the disclosed loopback test system, each loopback cable assembly of the at least one loopback cable assembly may further include a housing between the loopback optical interfaces that are part of the loopback cable assembly. In this embodiment, for each loopback cable assembly of the at least one loopback cable assembly, at least some of the second loopback optical waveguides that are part of the loopback cable assembly may enter the housing from a first cable section of the loopback cable assembly and loop back within the housing to also exit into the first cable section, and at least some of the third loopback optical waveguides that are part of the loopback cable assembly may enter the housing from the first cable section of the loopback cable assembly and exit the housing into a second cable section of the loopback cable assembly.

In another aspect of the disclosure, an equipment rack is disclosed. The equipment rack includes a frame, an optical shuffle device, one or more servers, and at least one of the loopback test devices described above. The optical shuffle device includes a housing secured the frame, a plurality of network-side optical interfaces, at least one spare optical interface, and a plurality shuffle optical waveguides each coupled to one of the network-side optical interfaces and extending at least partially within the housing. The plurality of shuffle optical waveguides defines multiple subsets of the shuffle optical waveguides for each of the network-side optical interfaces, and each spare optical interface of the at least one spare optical interface is operatively coupled to a respective one of the network-side optical interfaces by one of the subsets of the shuffle optical waveguides that are associated with the respective network-side optical interface. The one or more servers are secured to the frame, and each of the servers includes a plurality of server ports that are each operatively coupled to a respective one of the subsets of the shuffle optical waveguides. The loopback test device is coupled to the optical shuffle device by each of the network loopback optical interfaces being coupled to a respective one of the network-side optical interfaces and each spare loopback optical interface of the at least one spare loopback optical interface of the loopback test device is coupled to a respective spare optical interface of the at least one spare optical interface. The first, second, and third loopback optical waveguides are arranged in the network loopback optical interfaces and the at least one spare loopback optical interface so that each subset of the shuffle optical waveguides that is operatively coupled to one of the server ports is cross-connected through the loopback test system to another subset of the shuffle optical waveguides that is operatively coupled to another of the server ports, with at least one of the cross-connections passing through the at least one spare loopback optical interface and two of the network loopback optical interfaces.

In another aspect of the disclosure, another loopback test system for testing optical connectivity of an equipment rack is disclosed. The equipment rack includes an optical shuffle device and at least one server. The optical shuffle device includes a plurality of network-side optical interfaces, at least one spare optical interface, and a plurality shuffle optical waveguides each coupled to one of the network-side optical interfaces and extending at least partially within the optical shuffle device. The plurality of shuffle optical waveguides defines multiple subsets of the shuffle optical waveguides for each of the network-side optical interfaces. The at least one server includes a plurality of server ports that are each operatively coupled to a respective one of the subsets of the shuffle optical waveguides. The loopback test system includes a plurality of loopback optical interfaces and a plurality of loopback optical waveguides. The loopback optical interfaces include network loopback optical interfaces each configured to couple to a respective one of the network-side optical interfaces of the optical shuffle device, and at least one spare loopback optical interface each configured to couple to a respective spare optical interface of the at least one spare optical interface. Each of the plurality of loopback optical waveguides is operatively coupled to two of the loopback optical interfaces. The loopback optical waveguides is configured so that when the loopback test system is operatively coupled to the optical shuffle device, each subset of the shuffle optical waveguides that is operatively coupled to one of the server ports is cross-connected through the loopback test system to a respective other subset of the shuffle optical waveguides that is operatively coupled to another of the server ports, with at least one of the cross-connections passing through the at least one spare loopback optical interface and two of the network loopback optical interfaces.

In an embodiment of the other disclosed loopback test system, the plurality of loopback optical waveguides may include a plurality of first loopback optical waveguides, a plurality of second loopback optical waveguides, and a plurality of third loopback optical waveguides. Each of the plurality of first loopback optical waveguides may have one end operatively coupled to one of the network loopback optical interfaces and another end operatively coupled to another of the network loopback optical interfaces. Each of the plurality of second loopback optical waveguides may have opposite ends operatively coupled to one of the network loopback optical interfaces that is different than any of the network loopback optical interfaces to which the first loopback optical waveguides are operatively coupled such that each second loopback optical waveguide is configured to receive optical signals from the network loopback optical interface to which the second loopback optical waveguide is operatively coupled and direct the optical signals back to the same network loopback optical interface. Each of the plurality of third loopback optical waveguides may have one end operatively coupled to a spare loopback optical interface of the at least one spare loopback optical interface and another end operatively coupled to one of the network loopback optical interfaces to which at least one of second loopback optical waveguides is operatively coupled.

In another embodiment of the other disclosed loopback test system, each of the network loopback optical interfaces to which the first loopback optical waveguides are operatively coupled may be associated with twenty-four of the first loopback optical waveguides, each network loopback optical interface to which any of the second loopback optical waveguides are operatively coupled may be associated with eight of the second loopback optical waveguides and eight of the third loopback optical waveguides, and each spare loopback optical interface of the at least one spare loopback optical interface may be associated with eight of the third loopback optical waveguides.

In another embodiment of the other disclosed loopback test system, the plurality of loopback optical interfaces may include eight of the network loopback optical interfaces to which the first loopback optical waveguides are operatively coupled, four of the network loopback optical interfaces to which the second loopback optical waveguides are operatively coupled, and four of the spare loopback optical interfaces.

In another embodiment of the other disclosed loopback test system, the system may further include at least one jumper cable assembly. Each jumper cable assembly of the at least one jumper cable assembly may include at least some of the first loopback optical waveguides and the network loopback optical interfaces that are operatively coupled to the ends thereof.

In another embodiment of the other disclosed loopback test system, the system may further include at least one loopback cable assembly. Each loopback cable assembly of the at least one loopback cable assembly may include at least some of the second loopback optical waveguides, at least some of the third loopback optical waveguides, and the loopback optical interfaces that are operatively coupled to the ends of the at least some of the second loopback optical waveguides and the at least some third loopback optical waveguides.

In another embodiment of the other disclosed loopback test system, each loopback cable assembly of the at least one loopback cable assembly may further include a housing between the loopback optical interfaces that are part of the loopback cable assembly. For each loopback cable assembly of the at least one loopback cable assembly, the at least some of the second loopback optical waveguides that are part of the loopback cable assembly may enter the housing from a first cable section of the loopback cable assembly and loop back within the housing to also exit into the first cable section, and the at least some of the third loopback optical waveguides that are part of the loopback cable assembly may enter the housing from the first cable section of the loopback cable assembly and exit the housing into a second cable section of the loopback cable assembly.

In another embodiment of the other disclosed loopback test system, the loopback test system may include a plurality of loopback test subassemblies each having three of the network loopback optical interfaces and one spare loopback optical interface of the at least one spare loopback optical interface.

In another embodiment of the other disclosed loopback test system, each loopback optical interface of the plurality of loopback optical interfaces may include an optical connector.

In another aspect of the disclosure, a method of performing an optical connectivity test on an equipment rack is disclosed. The equipment rack includes an optical shuffle device and at least one server having a plurality of server ports. The optical shuffle device has a plurality of network-side optical interfaces, at least one spare optical interface, and a plurality shuffle optical waveguides each coupled to one of the network-side optical interfaces and extending at least partially within the optical shuffle device. The plurality of shuffle optical waveguides defines multiple subsets of the shuffle optical waveguides for each of the network-side optical interfaces. The method includes operatively coupling each of the server ports to a respective subset of the multiple subsets of the shuffle optical waveguides, and coupling each network-side optical interface and each spare optical interface of the optical shuffle device to a respective loopback optical interface of a loopback test system. The coupling results in the plurality of shuffle optical waveguides and the loopback test system cross-connecting each of the server ports with another one of the server ports, wherein at least one of the cross-connections passes through the at least one spare optical interface and two network optical interfaces. The method further includes transmitting, through the cross-connections established by the plurality of shuffle optical waveguides and the loopback test system, one or more optical signals from each server port in a first subset of the server ports to a respective server port in a second subset of the server ports, and in response to receiving each of the one or more optical signals transmitted to each of the server ports in the second subset of server ports, determining the equipment rack has passed the optical connectivity test.

In an embodiment of the disclosed method, each loopback optical interface of some of the loopback optical interfaces may be a respective network loopback optical interface, at least one of the loopback optical interfaces may be different than any of the network loopback optical interfaces, and each of the ate least one of the loopback optical interfaces may be a respective spare loopback optical interface. In this embodiment, the plurality of loopback optical waveguides may include a plurality of first loopback optical waveguides, a plurality of second loopback optical waveguides, and a plurality of third loopback optical waveguides. Each of the first loopback optical waveguides may have one end operatively coupled to one of the network loopback optical interfaces and another end operatively coupled to another of the network loopback optical interfaces. Each of the second loopback optical waveguides may have opposite ends operatively coupled to one of the network loopback optical interfaces that is different than any of the network loopback optical interfaces to which the first loopback optical waveguides are operatively coupled such that the transmitting comprises each second loopback optical waveguide receiving the one or more optical signals through the network loopback optical interface to which the second loopback optical waveguide is operatively coupled and directing the optical signals back to the same network loopback optical interface. Each of the third loopback optical waveguides may have one end operatively coupled to a spare loopback optical interface of the at least one spare loopback optical interface and another end operatively coupled to one of the network loopback optical interfaces to which at least one of second loopback optical waveguides is operatively coupled.

In another embodiment of the disclosed method, each of the network loopback optical interfaces to which the first loopback optical waveguides are operatively coupled may be associated with twenty-four of the first loopback optical waveguides, each network loopback optical interface to which any of the second loopback optical waveguides are operatively coupled may be associated with eight of the second loopback optical waveguides and eight of the third loopback optical waveguides, and each of the at least one spare loopback optical interface may be associated with eight of the third loopback optical waveguides.

In another embodiment of the disclosed method, the plurality of loopback optical interfaces may include eight of the network loopback optical interfaces to which the first loopback optical waveguides are operatively coupled, four of the network loopback optical interfaces to which the second loopback optical waveguides are operatively coupled, and four of the spare loopback optical interfaces.

In another embodiment of the disclosed method, the loopback test system may further include at least one jumper cable assembly, each jumper cable assembly of the at least one jumper cable assembly may include at least some of the first loopback optical waveguides and the network loopback optical interfaces that are operatively coupled to the ends thereof, and coupling each network-side optical interface of the optical shuffle device to a respective loopback optical interface of the loopback test system may further include coupling each jumper cable assembly of the at least one jumper cable assembly to a respective pair of the network-side optical interfaces.

In another embodiment of the disclosed method, the loopback test system may further include at least one loopback cable assembly, each loopback cable assembly of the at least one loopback cable assembly may include at least some of the second loopback optical waveguides, at least some of the third loopback optical waveguides, and the loopback optical interfaces that are operatively coupled to the ends of said at least some second loopback optical fibers and said at least some third loopback optical fibers, and coupling each network-side optical interface and each spare optical interface of the optical shuffle device to a respective loopback optical interface of the loopback test system may further include coupling each loopback cable assembly of the at least one loopback cable assembly to a respective one of the network-side optical interfaces and to a respective spare optical interface of the at least one spare optical interface.

In another embodiment of the disclosed method, each loopback cable assembly of the at least one loopback cable assembly may further include a housing between the loopback optical interfaces that are part of the loopback cable assembly. In this embodiment, for each loopback cable assembly of the at least one loopback cable assembly, at least some of the second loopback optical waveguides that are part of the loopback cable assembly may enter the housing from a first cable section of the loopback cable assembly and loop back within the housing to also exit into the first cable section, and the at least some of the third loopback optical waveguides that are part of the loopback cable assembly may enter the housing from the first cable section of the loopback cable assembly and exit the housing into a second cable section of the loopback cable assembly.

In another embodiment of the disclosed method, the loopback test system may include a plurality of loopback test subassemblies each having three of the network loopback optical interfaces and one spare loopback optical interface of the at least one spare loopback optical interface.

In another embodiment of the disclosed method, each loopback optical interface of the plurality of loopback optical interfaces may include an optical connector.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a diagrammatic view of an exemplary scalable unit including a plurality of server racks and a switch rack.
Fig. 2 is a diagrammatic view of a server rack and the switch rack of Fig. 1 depicting connections between: (i) a server-side optical shuffle device and servers in the server rack; (ii) a switch-side optical shuffle device and switches in the switch rack; and (iii) the server-side and switch-side optical shuffle devices.
Figs. 3A and 3B are schematic views illustrating connections between server ports of one of the servers in the server rack of Fig. 2 and certain optical interfaces of the server-side optical shuffle device of Fig. 2.
Figs. 4A and 4B are schematic views of a loopback test system according to one embodiment of this disclosure for testing the connections illustrated in Figs. 3A and 3B.
Fig. 5 is a schematic view illustrating in further detail how the loopback test system of Figs. 4A and 4B can couple to and route optical signals between optical interfaces of the server-side shuffle device so that each of the server ports is cross-connected another one of the server ports.
Fig. 6 is a schematic view of an exemplary loopback cable assembly that may be used as part of a loopback test system according to this disclosure.
Fig. 7 is a schematic view of one embodiment for the exemplary loopback cable assembly of Fig. 6.
Fig. 8 is a schematic view an exemplary loopback test system according to another embodiment of this disclosure including a plurality of loopback test subassemblies operatively coupled to an exemplary server-side optical shuffle device including a plurality of shuffle subassemblies.
Fig. 9 is a diagrammatic view of the loopback test system of Fig. 8 operatively coupled to the server-side optical shuffle of Fig. 2.

### Detailed Description

Various embodiments will be further clarified by examples in the description below. In general, the description relates to a system and method of verifying operation of an integrated equipment rack that includes a plurality of servers and an optical shuffle device through which the plurality of servers are operatively coupled to an optical network, such as a leaf-spine optical network.

The term "fiber optic connector" in this disclosure may be simplified to "connector" for convenience. The connectors may be any suitable type of connector, including physical contact connectors and lensed-based connectors. In certain instances, it may be beneficial to use certain types of multi-fiber connectors, such as multi-fiber push-on/pull-off (MPO) connectors (e.g., according to IEC 61754-7) or MMC connectors (available from US Conec, Ltd.), or small form factor (SFF) connectors in simplex or duplex configuration, such as LC connectors (e.g., according to IEC 61754-20). However, it should be understood that any suitable connectors may be used, as will be appreciated by persons skilled in optical connectivity.

The term "optical interface" in this disclosure refers to any device that enables optical waveguides (e.g., optical fibers) to be connected and disconnected from one another such that, aside from normal wear and tear, making and breaking the connection does not permanently alter either optical interface. When two optical interfaces are connected, the optical waveguides of the interfaces are operatively coupled such that optical signals can be transmitted between the optical waveguides of the different interfaces. Exemplary connected optical interfaces may include two connectors connected by an adapter, a connector connected to an optical port (simplified to "port" for convenience) of a transceiver or other optical equipment, or any other combination of connectors, adapters, ports, or other devices that enables transmission of optical signals between optical fibers.

The term "optical shuffle device" in this disclosure refers to a device including at least two optical interfaces and a plurality of optical waveguides (e.g., optical fibers) connecting the optical interfaces. The optical waveguides of an optical shuffle device may be configured so that the arrangement of optical fibers at one of the optical interfaces is different from the arrangement of the optical fibers in at least one other optical interface. Optical shuffle devices may be used to route optical signals between multiple optical interfaces in a predetermined way that depends on the configuration of the optical waveguides thereof. Thus, optical shuffle devices may be used to define optical connectivity between large numbers of optical fibers as well as to combine/separate optical signals carried by individual optical fibers with/from fiber optic cable assemblies connected to the optical shuffle device.

The term "operatively coupled" in this disclosure refers to a functional interconnection between two or more elements, with the interconnection facilitated by one or more optical waveguides (e.g., optical fibers). This term is inclusive of both direct and indirect linkages. An example of a direct linkage between two elements is an optical fiber (first element) having an end directly coupled to or incorporated into an optical interface (second element). If an opposite end of the optical fiber is directly coupled to or incorporated into another optical interface (third element), the two optical interfaces (second and third elements) are considered to be directly linked by the optical fiber (first element). An example of an indirect linkage is an optical fiber (first element) coupled to an optical interface (second element) through one or more intermediary optical fibers or waveguides. Another example is two optical interfaces coupled to different optical fibers, which in turn are interconnected to each other directly or indirectly through one or more intermediary optical fibers or other waveguides.

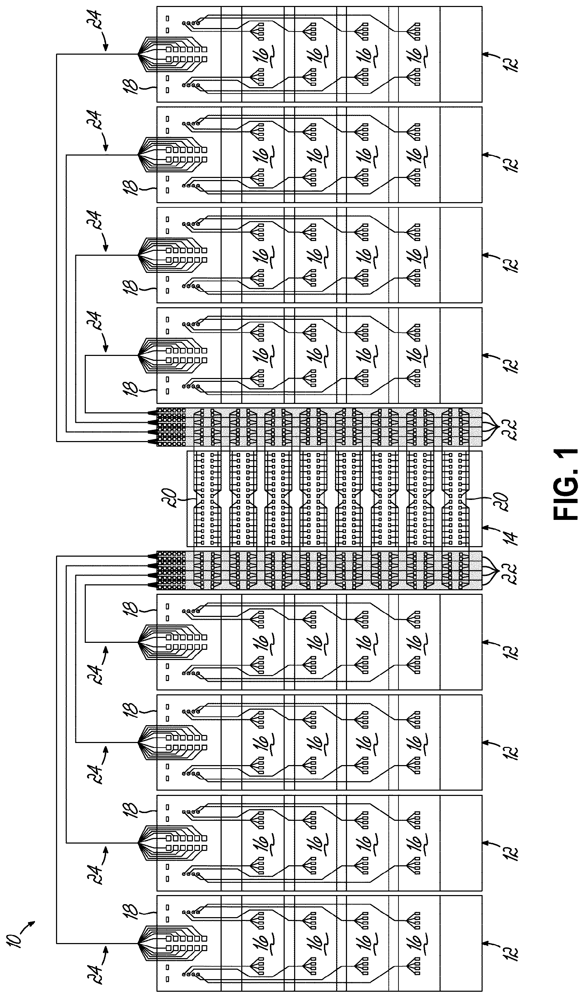

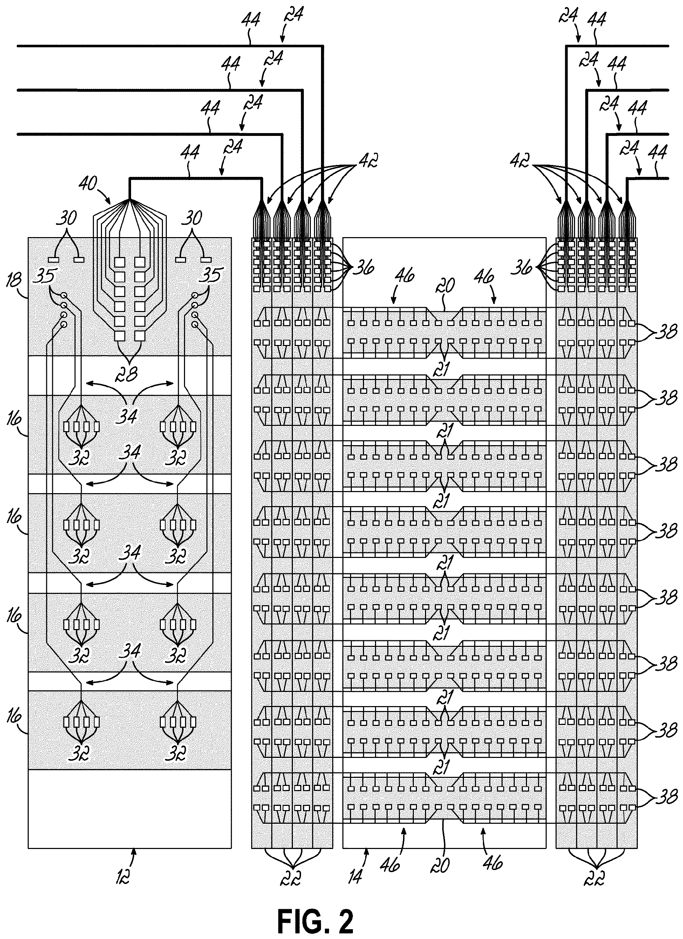

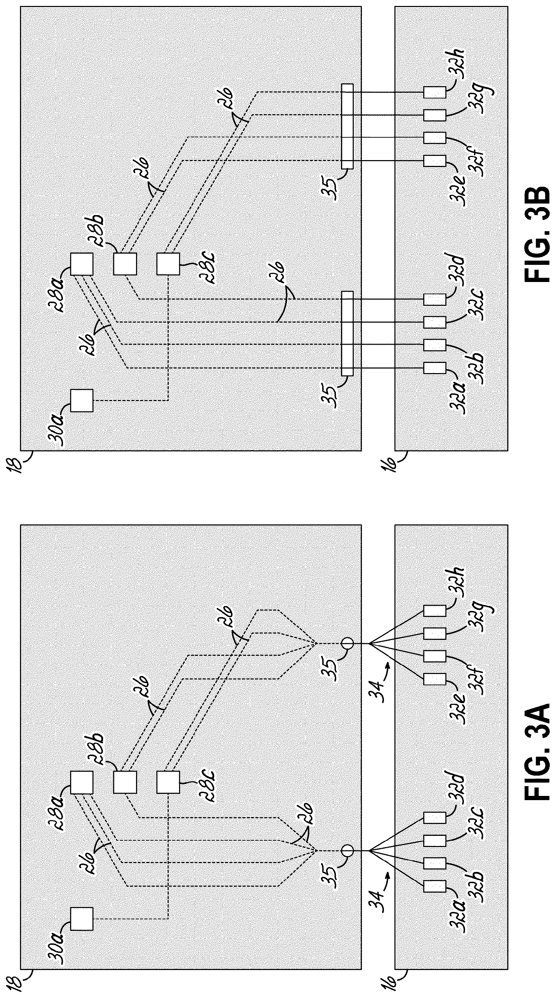

Figs. 1 and 2 depict an exemplary scalable unit 10 including a plurality of server racks 12 and a switch rack 14. Each server rack 12 includes a plurality of servers 16 that are operatively coupled to a server-side optical shuffle device 18. The switch rack 14 includes a plurality of switches 20 (e.g., leaf switches) each operatively coupled to one or more switch-side optical shuffle devices 22 by fiber optic jumper assemblies 46. Each server-side optical shuffle device 18 is operatively coupled to a respective switch-side optical shuffle device 22, e.g., by a structured optical cable assembly 24. As best shown by Fig. 2, each server-side optical shuffle device 18 may include a plurality of network-side optical interfaces 28 (e.g., twelve network-side ports) and a plurality of spare optical interfaces 30 (e.g., four spare ports). Each network-side optical interface 28 may define an optical interface including plurality of optical fibers (e.g., 24 optical fibers). The optical fibers of the optical shuffle device 18 that are associated with the network-side optical interfaces 28 will be referred to in this description as "shuffle optical fibers" 26 (see Figs. 3A-5). These shuffle optical fibers 26 extend within the optical shuffle device 18 and operatively couple to one of the spare optical interfaces 30 or, as will be discussed in greater detail below, become part of optical links that exit optical the optical shuffle device 18 and couple to server ports 32 of the servers 16.

Still referring to Fig. 2, each spare optical interface 30 may define an optical interface including a number of optical fibers that is different from the network-side optical interfaces 28. The optical fibers of each spare optical interface 30 may be a subset of the shuffle optical fibers 26 of one of the network-side optical interfaces 28. In other words, within the optical shuffle device 18, some of the shuffle optical fibers 26 from a given one of the network-side optical interfaces 28 may extend to and be part of a given one of the spare optical interfaces 30. As a specific example, each network-side optical interface may include 24 shuffle optical fibers 26 and each spare optical interface 30 may include eight shuffle optical fibers 26, with the eight shuffle optical fibers 26 being a subset of the 24 shuffle optical fibers 26 from one of the network-side optical interfaces 28.

Each of the servers 16 includes a plurality of the server ports 32 (e.g., eight server ports 32). As briefly referenced above, for each server port 32, an optical link is established between the server port 32 and one of the network-side optical interfaces 28. Fig. 2, for example, illustrates cable assemblies 34 extending out of respective openings 35 on the optical shuffle device 18 and coupling to respective groups of the server ports 32. The cable assemblies 34 may comprise lengths of the shuffle optical fibers 26 that extend from within the optical shuffle device 18. In other words, the shuffle optical fibers 26 of the network-side optical interfaces 28 may be rearranged/re-grouped within the optical shuffle device 18 and then become part of one of the cable assemblies 34 that couples to a group of the server ports 32. In the embodiment shown, each cable assembly 34 includes a trunk segment and a plurality of legs extending from an end thereof. Each leg of each cable assembly 34 may include a connector (e.g., an 8-fiber MPO connector - not shown) configured to couple to a respective server port 32 of a respective server 16 of server rack 12.

To provide a better understanding of how the optical shuffle device 18 may be coupled to the servers 16, Figs. 3A and 3B are schematic diagrams illustrating just three of the network-side optical interfaces 28, one of the spare optical interfaces 30, and one of the servers 16. Figs. 3A and 3B also illustrate one example of how subsets of the shuffle optical fibers 26 may be routed between the network-side optical interfaces 28 and either the spare optical interface 30 (as discussed above) or the server ports 32. In Fig. 3A, two cable assemblies 34 couple to respective groups of four server ports 32 and extend into the optical shuffle device 18 through respective openings 35. The legs of each cable assembly 34 each include a subset of the shuffle optical fibers 26 from one of the network-side optical interfaces 28 for coupling to a respective server port 32. Although for each cable assembly 34 the different subsets of the shuffle optical fibers 26 may be carried together within the trunk segment of the cable assembly 34, the subsets are separated from each other within the optical shuffle device 18 as needed to route to the network-side optical interfaces 28 according to a desired wiring scheme/pattern. To this end, the grouping of the subsets of the shuffle optical fibers 26 for cabling between the server ports 32 and the optical shuffle device 18 may be different in other embodiments, as ultimately the optical shuffle device 18 still regroups and/or rearranges the subsets of the shuffle optical fibers 26 as needed for routing to the network-side optical interfaces 28. Indeed, in some embodiments there may not even be any grouping for common cabling between the server ports 32 and the optical shuffle device 18, as schematically shown in Fig. 3B. Only Fig. 3B will be referenced in the discussion that follows for sake of simplicity.

As shown in Fig. 3B, first, second, and third server ports 32a, 32b, 32c are coupled to respective first, second, and third subsets of the shuffle optical fibers 26 that extend from a first network-side optical interface 28a. Fourth, fifth, and sixth server ports 32d, 32e, 32f are coupled to respective first, second, and third subsets of the shuffle optical fibers 26 that extend from a second network-side optical interface 28b. Seventh and eighth server ports 32g, 32f are coupled to respective first and second subsets of the shuffle optical fibers 26 that extend from a third network-side optical interface 28c, which also includes a third subset of the shuffle optical fibers 26 extending to the first spare optical interface 30a. According to one example, each of the network-side optical interfaces 28 may include 24 shuffle optical fibers 26, and each subset of the shuffle optical fibers 26 may include eight shuffle optical fibers 26. Although the embodiment shown schematically illustrates the shuffle optical fibers 26 extending all the way between the network-side optical interfaces 28 and the associated server ports 32, in alternative embodiments the shuffle optical fibers 26 for the server ports 32 may only extend from the network-side optical interfaces 28 to one or more additional optical interfaces (not shown) provided on a front side of the optical shuffle device 18. The server ports 32 in such embodiments may then be coupled to the shuffle optical fibers 26 by one or more cables extending between the server ports 32 and the one or more additional optical interfaces.

Now referring back to Fig. 2, each of the servers 16 (and their respective server ports 32) may be connected to the optical shuffle device 18 in manner similar to that described above with reference to Figs. 3A and 3B. In other words, the server ports 32 of each server 16 may be operatively coupled to a respective subset (e.g., three) of the network-side optical interfaces 28 in a manner similar to that described above with reference to Figs. 3A and 3B. For each subset of the network-side optical interfaces 28 that is associated with one of the servers 16, at least one of the network-side optical interfaces 28 includes a subset of the shuffle optical fibers extending to a respective spare optical interface 30. The network-side optical interfaces 28 may each be configured to receive a respective multi-fiber connector, e.g., a 24-fiber MPO connector, from the structured optical cable assembly 24 that operatively couples the server rack 12 to the switch-side optical shuffle device 22.

Each switch-side optical shuffle device 22 may include a plurality of server-side ports 36 (e.g., 12 server-side ports 36) and a plurality of network-side ports 38 (e.g., 32 network-side ports 38). Each switch-side optical shuffle device 22 may be configured to operatively couple optical fibers received by each of the associated server-side ports 36 to optical fibers of the fiber optic jumper assemblies 46 that couple to the network-side ports 38. Each switch-side optical shuffle device 22 may therefore be configured to route optical signals between the optical fibers of one or more structured optical cable assemblies 24 and the optical fibers of the fiber optic jumper assemblies 46 in a predetermined manner.

Each structured optical cable assembly 24 may include a server-side breakout portion 40, a switch-side breakout portion 42, and a trunk segment 44 connecting the server-side breakout portion 40 and switch-side breakout portion 42. Each breakout portion of structured optical cable assembly 24 may include a plurality of legs. Each leg of server-side breakout portion 40 of structured optical cable assembly 24 may be terminated by a connector (not shown) configured to be received in and couple to a network-side optical interface 28 of server-side optical shuffle device 18, as mentioned above. Each leg of switch-side breakout portion 42 of structured optical cable assembly 24 may be terminated by a connector (not shown) configured to be received in and couple to a server-side port 36 of switch-side optical shuffle device 22.

The network-side ports 38 of the switch-side optical shuffle devices 22 may be operatively coupled to switch ports 21 of switches 20 in a predetermined manner by the plurality of fiber optic jumper assemblies 46. By way of example only, the trunk segment 44 of each cable assembly 24 may include 288 optical fibers (corresponding to 24 optical fibers for each of the 12 network-side optical interfaces 28, *i.e.* 24 x 12 optical fibers), 256 of which are for carrying optical signals that get routed to the server ports 32 by the server-side optical shuffle device 18 (four servers 16 each having eight server ports 32 configured for receiving eight shuffle optical fibers 26 creates the need for 8 x 8 x 4 = 256 optical signals/channels). The remaining 32 optical fibers (288 - 256 = 32) are dedicated to the spare optical interfaces 30 of server-side optical shuffle device 18. Thus, each spare optical interface 30 may provide an available back-up optical link to connect a server port 32 to a switch 20 in the event of a failure in a primary optical link. In operation, the server-side optical shuffle devices 18, switch-side optical shuffle devices 22, structured optical cable assemblies 24, cable assemblies 34, and fiber optic jumper assemblies 46 may collectively define optical connectivity between the each server 16 and each switch 20.

The use of optical shuffles and fiber optic jumper assemblies facilitates pre-assembly of equipment racks in a production facility. Pre-assembled racks can then be shipped to data centers, installed, and connected with structured optical cable assemblies in much less time than would be required to assemble a scalable unit 10 on-site from individual components. The standardization of the scalable units 10 of computer clusters may further increase the speed and efficiency with which these pre-assembled equipment racks can be produced. However, this method of assembling computer clusters may also introduce some potential quality control issues.

For example, in a conventional data center computer cluster installation, connections between data processing units can be checked as optical cables are installed, and corrections made as mistakes or equipment failures are discovered. However, because preassembled server racks 12 are not connected to a switch rack 14 until the scalable unit 10 is assembled at the data center, defective components may not be discovered until the scalable unit 10 is powered up and the servers 16 try to communicate with each other through the network that includes the scalable unit 10. At this point, identifying and replacing the failed component may be significantly more costly and time consuming than if the defect had been discovered at the production facility.

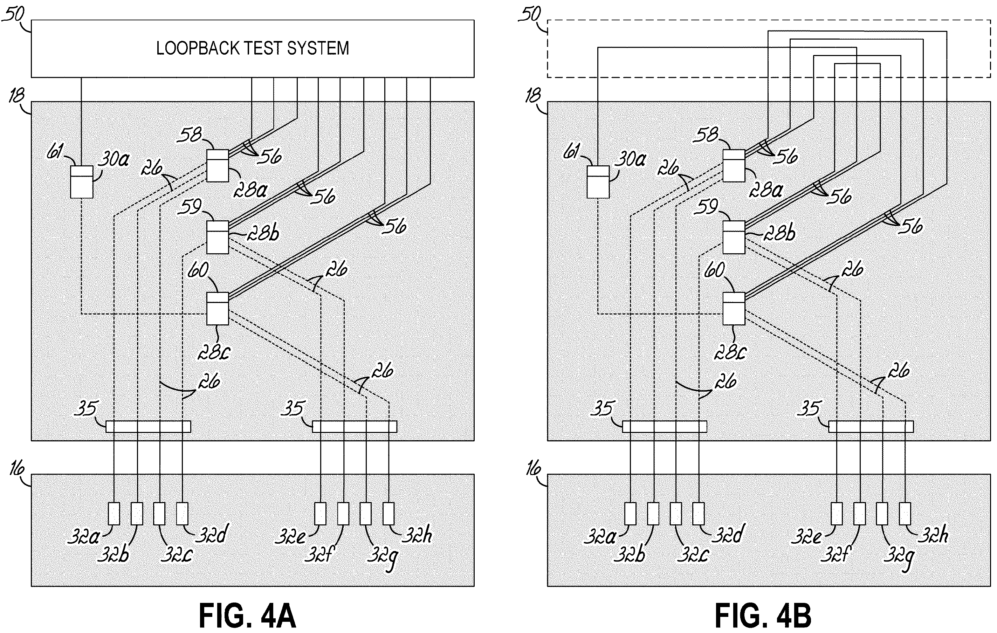

To address these and other challenges, the present disclosure provides loopback test systems that allow connectivity within a server rack 12, and specifically the connectivity between the server ports 32 and network-side optical interfaces 28, to be verified before installing the server rack 12 as part of a scalable unit 10. In general, loopback test systems according to this disclosure cross-connect each server port 32 to another server port 32 through the network-side optical interfaces 28 and spare optical interfaces 30. Figs. 4A and 4B illustrate this general principle for a subset of the network-side optical interfaces 28 (more specifically three of the network-side optical interfaces 28), one of the spare optical interfaces 30, and one of the servers 16. To this end, similar to Figs. 3A and 3B, Figs. 4A and 4B will be referenced for a general understanding of principles that may apply to other servers 16 and other optical interfaces of the optical shuffle device 18 (i.e., other network-side optical interfaces 28 and other spare optical interfaces 30), with Fig. 4A building upon Fig. 3B by adding a loopback test system 50 according to one example embodiment of this disclosure. The loopback test system 50 includes loopback optical interfaces 58, 59, 60, 61 for coupling loopback optical fibers 56 to the optical shuffle device 18. More specifically, the loopback test system 50 includes network loopback optical interfaces 58, 59, 60 for coupling to the network-side optical interfaces 28a, 28b, 28c, and a spare loopback optical interface 61 for coupling to the spare optical interface 30a. The loopback optical fibers 56 are arranged in the loopback test system 50 to perform the cross-connecting of the server ports 32 mentioned above.

To this end, according to one embodiment and as shown in Fig. 4B, the network loopback optical interfaces 58, 60 (i.e., two of the three network loopback optical interfaces in the figure) may be on opposite ends of the same loopback optical fibers 56. These loopback optical fibers will be referred to as "first loopback optical fibers" in this disclosure. In some embodiments, the first loopback optical fibers may simply be part of a jumper cable assembly that includes connectors on each of its ends as the loopback optical interfaces 58, 60. The other network loopback optical interface 59 in the figure is associated with groups of second and third loopback optical fibers 56. As will be described in further detail below, the second loopback optical fibers 56 each have opposite ends at the same network loopback optical interface 59 such that the second loopback optical fibers 56 are able to couple some of the shuffle optical fibers 26 associated with the network-side optical interface 28b to other shuffle optical fibers 26 at the same network-side optical interface 28b. The third loopback optical fibers 56 each include one end at the network loopback optical interface 59 and another end at the spare loopback optical interface 61. As will be described in greater detail below, in some embodiments the second and third loopback optical fibers 56 may be part of a unique loopback cable assembly that includes a relatively higher fiber count connector on one end defining the network loopback optical interface 59 (referred to below as "connector 59"), a relatively lower fiber count connector on an opposite end defining the spare loopback optical interface 61 (referred to below as "connector 61"), and a loopback of the second loopback optical fibers 56 somewhere between the ends of the loopback cable assembly.

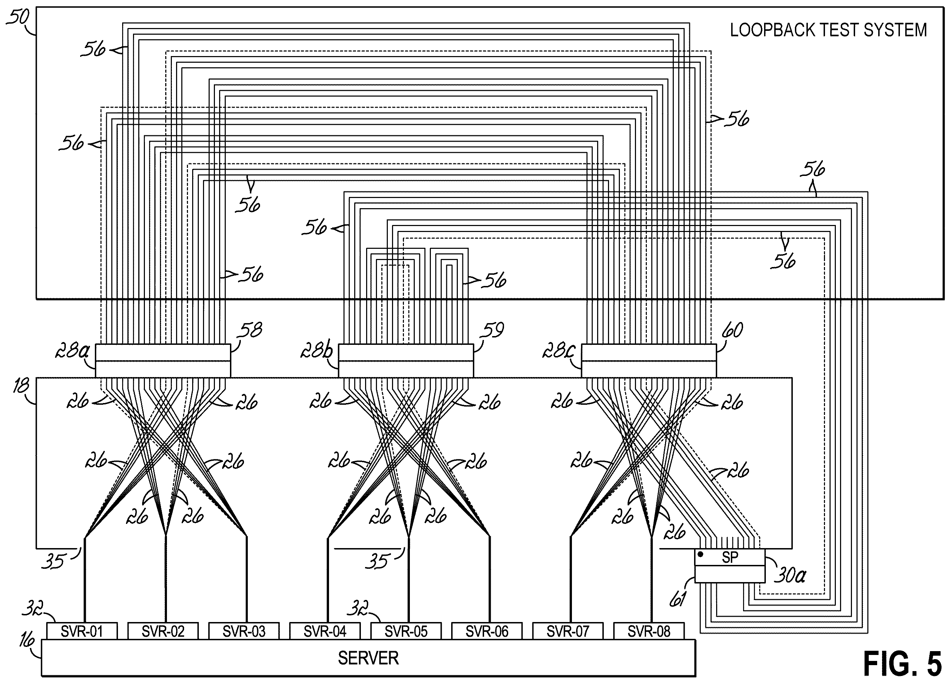

Fig. 5 illustrates in further detail how the loopback optical fibers 56 may be operatively coupled to the subsets of the shuffle optical fibers 26 that were described above in connection with the network-side optical interfaces 28a, 28b, 28c and spare optical interface 30a. The coupling is by way of the network loopback optical interfaces 58, 59, 60 and spare loopback optical interface 61 respectively coupling to the network-side optical interfaces 28a, 28b, or 28c and spare optical interface 30a. In the embodiment shown, each subset of the shuffle optical fibers 26 comprises eight total optical fibers.

As shown in Fig. 5, the subsets of the shuffle optical fibers 26 at the network-side optical interface 28a are associated with the server ports 32 labeled as SVR-01, SVR-02, and SVR-03. The subsets of the shuffle optical fibers 26 at the network-side optical interface 28b are associated with the server ports 32 labeled as SVR-04, SVR-05, and SVR-06. The subsets of the shuffle optical fibers 26 at the network-side optical interface 28c are associated with the server ports 32 labeled as SVR-07 and SVR-08 and the spare optical interface 30a. A first subset of the first loopback optical fibers 56 associated with the network loopback optical interfaces 58, 60 cross-connects the server ports 32 labeled SVR-01 and SVR-02, and a second subset of the first loopback optical fibers 56 associated with the network loopback optical interfaces 58, 60 cross-connects the server ports 32 labeled SVR-07 and SVR-08. The second loopback optical fibers 56 associated with the network loopback optical interface 59 form a loopback as part of the loopback test system 50 so that the server ports 32 labeled as SVR-04 and SVR-05 are cross-connected through the network-side optical interface 28b. Lastly, the server port 32 labeled as SVR-03 is cross-connected to the server port 32 labeled SVR-06 by: (i) a third subset of the first loopback optical fibers 56 associated with the network loopback optical interfaces 58, 60; (ii) the subset of shuffle optical fibers 26 that extend between the network-side optical interface 28c and spare optical interface 30a; and (iii) the third loopback optical fibers 56 that extend between the spare optical interface 30a and network loopback optical interface 28b. Thus, for optical signals to be transmitted between each pair of cross-connected server ports 32, all the optical connections associated with the server-side optical shuffle device 18 must function properly, including those associated with the network-side optical interfaces 28a, 28b, 28c and spare optical interface 30a. This enables the functionality of the server rack 12 (as it pertains to the optical shuffle device 18 and server 16) to be checked by the test applications running on the server 16, e.g., as part of a quality-control check prior to shipment of the server rack 12.

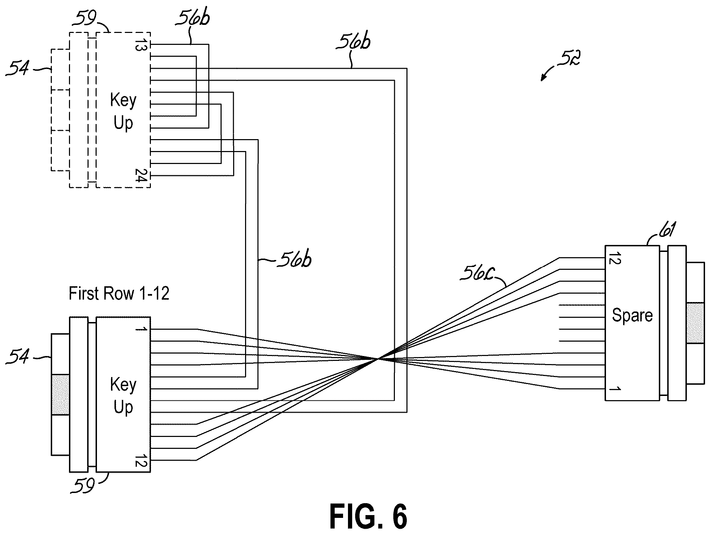

Fig. 6 is a diagram for an exemplary loopback cable assembly 52 including the network loopback optical interface 59 and spare loopback optical interface 61. In this example, the network loopback optical interface 59 comprises a 24-fiber connector having a ferrule 54 with two rows of 12 loopback optical fibers 56, with both rows of the same connector represented on the left in Fig. 6. The spare optical interface 61 in this example comprises an 8-fiber connector. Fig. 6 schematically illustrates how second loopback optical fibers 56b may each extend from one row of the ferrule 54 and then loop back to extend to the other row of the ferrule 54. In other words, each of the second loopback optical fibers 56b has one end in a first row of the ferrule 54 of the connector 59 and an opposite end in a second row of the ferrule 54 of the same connector 59. There are eight second loopback optical fibers 56b in this example, meaning that there are 16 ends of the second loopback optical fibers 56b terminated by the connector 59. An alternative way to consider the grouping is that the 16 ends of the second loopback optical fibers 56b represent two groups of eight, with each group corresponding to one of the subsets of shuffle optical fibers 26 associated with the network-side optical interface 28 to which the connector 59 is coupled. The third loopback optical fibers 56c (eight total in this example) each have one end terminated by the connector 59 and an opposite end terminated by the connector 61.

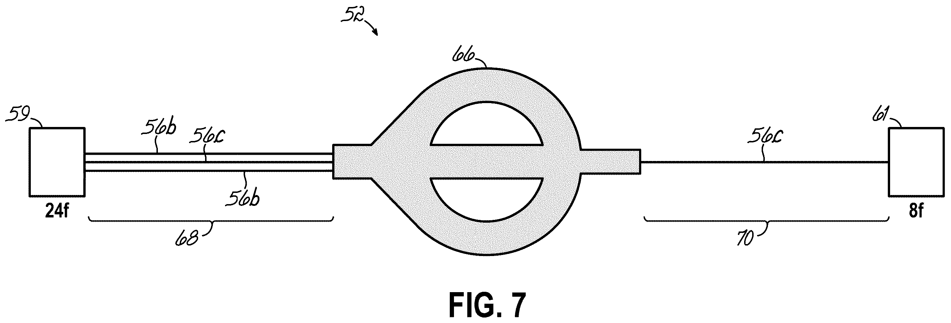

Fig. 7 is another schematic diagram showing a potential embodiment for the exemplary loopback cable assembly 52 of Fig. 6. The second loopback optical fibers 56b may extend from the connector 59 to enter a loopback housing 66 through a first opening or side of the loopback housing 66. Inside the loopback housing 66, the second loopback optical fibers 56b perform the loop back described above and then exit the loopback housing 66 through the first opening or side to extend back to the connector 59. Conversely, the third loopback optical fibers 56c may enter the loopback housing 66 through the first opening or side and then pass through the loopback housing 66 and exit through a second opening or side to extend to the connector 61. Portions of the loopback cable assembly 52 between the connectors 59, 61 and loopback housing 66 may be cabled such that the loopback cable assembly 52 resembles a jumper cable assembly with the loopback housing 66 positioned somewhere along its length. Such a loopback cable assembly 52 can be considered to have a first cable section 68 between the connector 59 and the housing 66, and a second cable section 70 between the housing 66 and the connector 61.

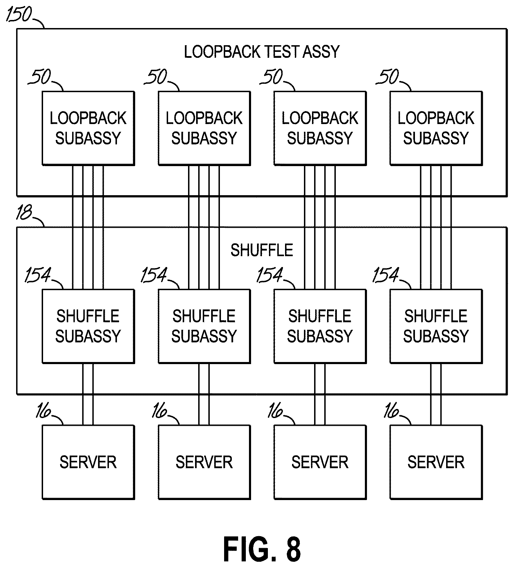

Referring back to Figs. 4A, 4B, and 5, the loopback test system 50 was described in connection with three of the network-side optical interfaces 28, one of the spare optical interfaces 30, and one of the servers 16. Connections for other servers 16 in the server rack 12 may each be tested in similar manner using another subset of three network-side optical interfaces 28 and another spare optical interface 30 by applying the same principles. In this regard, the loopback test system 50 described above may be considered as a loopback test subassembly 50 of a larger loopback test system 150 for the entire server rack 12, as schematically shown in Fig. 8. The optical shuffle device 18 in Fig. 8 is shown as including four shuffle subassemblies 154, which each represent what was described in connection with Figs. 3A and 3B, i.e. the collection of shuffle optical fibers 26, network-side optical interfaces 28, and spare optical interface 30 associated with a given server 16. In other words, each of the server ports 32 of one server 16 are associated with a respective shuffle subassembly 154. The exemplary modular configuration of the optical shuffle device 18 depicted by Fig. 8 enables a corresponding modular configuration of the loopback test system 150. Accordingly, each loopback test subassembly 50 may be configured to cross-connect the server ports 32 of the associated server 16 in a predetermined manner. Organizing the optical shuffle device 18 and loopback test system 150 into subassemblies may facilitate their design and production.

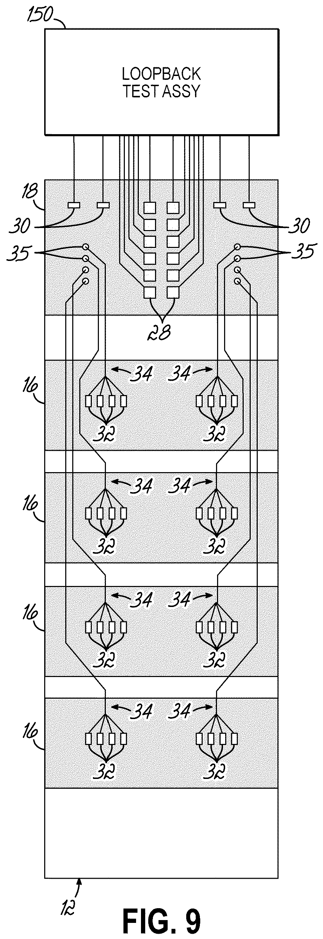

Fig. 9 illustrates the loopback test system 150 being used with one of the server racks 12. As can be appreciated based on the description above, the loopback optical interfaces 58, 59, 60, 61 (Fig. 5; not shown in Fig. 9 to simplify the figure) connect to the network-side optical interfaces 28 and spare optical interfaces 30 of the optical shuffle device 18. The loopback test system 150 is configured to operatively couple each shuffle optical fiber 26 to another shuffle optical fiber 26 in the manner described above to result in each server port 32 being cross-connected to another server port 32. Some of the cross-connections involve the loopback test system 150 establishing optical paths between pairs of the network-side optical interfaces 28, while other cross-connections involve the loopback test system 150 establishing optical paths between one of the network-side optical interfaces 28 and one of the spare optical interfaces 30. The cross-connections established by the loopback test system 150 allow the servers 16 of the server rack 12 to verify connectivity through the optical shuffle device 18. For example, a test application running on each server 16 may test the optical fiber links associated with the server 16 by causing the server 16 to transmit optical signals between cross-connected server ports 32 and provide an indication of the results. Faulty links may then be identified at the production facility, and corrective action taken before pre-assembled racks are shipped to the data center.

Although embodiments are described above involving a modular configuration with each server port 32 of each server 16 being cross-connected to another server port 32 of the same server 16 by the loopback test system 150, this disclosure is not limited to such a configuration. For example, if desired, the loopback test system 150 may alternatively be configured to cross-connect one or more server ports 32 of a server 16 to one or more server ports 32 of one or more other servers 16. In general, the loopback test system 150 may be configured to cross-connect server ports 32 within or between servers 16 as needed to enable testing of the optical links between the servers 16 and the optical shuffle device 18.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. For example, in alternative embodiments the optical shuffle device and/or loopback test system may include optical waveguides (e.g., loopback optical waveguides and/or shuffle optical waveguides) in a different form than optical fibers, such as waveguides formed in a glass substrate. The present disclosure in its broader aspects is therefore not limited to the specific details, representative apparatus and methods and illustrative examples shown and described. Accordingly, departures may be made from such details without departing from the scope of the present disclosure.

## Claims

1. A loopback test system, comprising:
a plurality of loopback optical interfaces that includes a plurality of network loopback optical interfaces and at least one spare loopback optical interface;
a plurality of first loopback optical waveguides each having one end operatively coupled to one of the network loopback optical interfaces and another end operatively coupled to another of the network loopback optical interfaces;
a plurality of second loopback optical waveguides each having opposite ends operatively coupled to one of the network loopback optical interfaces that is different than any of the network loopback optical interfaces to which the first loopback optical waveguides are operatively coupled such that each second loopback optical waveguide is configured to receive optical signals from the network loopback optical interface to which the second loopback optical waveguide is operatively coupled and direct the optical signals back to the same network loopback optical interface; and
a plurality of third loopback optical waveguides each having one end operatively coupled to a spare loopback optical interface of the at least one spare loopback optical interface and another end operatively coupled to one of the network loopback optical interfaces to which at least one of the second loopback optical waveguides is operatively coupled.

2. The loopback test system of claim 1, wherein:
each of the network loopback optical interfaces to which the first loopback optical waveguides are operatively coupled is associated with twenty-four of the first loopback optical waveguides,
each network loopback optical interface to which any of the second loopback optical waveguides are operatively coupled is associated with eight of the second loopback optical waveguides and eight of the third loopback optical waveguides, and
each spare loopback optical interface of the at least one spare loopback optical interface is associated with eight of the third loopback optical waveguides.

3. The loopback test system of claim 2, wherein the plurality of loopback optical interfaces includes eight of the network loopback optical interfaces to which the first loopback optical waveguides are operatively coupled, four of the network loopback optical interfaces to which the second loopback optical waveguides are operatively coupled, and four of the spare loopback optical interfaces.

4. The loopback test system of any of claims 1-3, wherein the loopback test system comprises a plurality of loopback test subassemblies each including three of the network loopback optical interfaces and one of the at least one spare loopback optical interface.

5. The loopback test system of any of claims 1-4, wherein each loopback optical interface of the plurality of loopback optical interfaces comprises an optical connector.

6. The loopback test system of any of claims 1-5, further comprising at least one jumper cable assembly, wherein each jumper cable assembly of the at least one jumper cable assembly comprises at least some of the first loopback optical waveguides and the network loopback optical interfaces that are operatively coupled to the ends thereof.

7. The loopback test system of any of claims 1-6, further comprising at least one loopback cable assembly, wherein each loopback cable assembly of the at least one loopback cable assembly includes at least some of the second loopback optical waveguides, at least some of the third loopback optical waveguides, and the loopback optical interfaces that are operatively coupled to the ends of said at least some of the second loopback optical waveguides and said at least some of the third loopback optical waveguides.

8. The loopback test system of claim 7, wherein each loopback cable assembly of the at least one loopback cable assembly further includes a housing between the loopback optical interfaces that are part of the loopback cable assembly, and further wherein for each loopback cable assembly of the at least one loopback cable assembly:
the at least some of the second loopback optical waveguides that are part of the loopback cable assembly enter the housing from a first cable section of the loopback cable assembly and loop back within the housing to also exit into the first cable section, and
the at least some of the third loopback optical waveguides that are part of the loopback cable assembly enter the housing from the first cable section of the loopback cable assembly and exit the housing into a second cable section of the loopback cable assembly.

9. An equipment rack that includes the loopback test system of any preceding claim, comprising
a frame;
an optical shuffle device including a housing secured the frame, a plurality of network-side optical interfaces, at least one spare optical interface, and a plurality shuffle optical waveguides each coupled to one of the network-side optical interfaces and extending at least partially within the housing, wherein:
the plurality of shuffle optical waveguides defines multiple subsets of the shuffle optical waveguides for each of the network-side optical interfaces, and
each spare optical interface of the at least one spare optical interface is operatively coupled to a respective one of the network-side optical interfaces by one of the subsets of the shuffle optical waveguides that are associated with the respective network-side optical interface;
one or more servers secured to the frame, wherein the one or more servers include a plurality of server ports that are each operatively coupled to a respective one of the subsets of the shuffle optical waveguides;
wherein the loopback test system of any preceding claim is coupled to the optical shuffle device by each of the network loopback optical interfaces being coupled to a respective one of the network-side optical interfaces and each spare loopback optical interface of the at least one spare loopback optical interface being coupled to a respective spare optical interface of the at least one spare optical interface,
wherein the first, second, and third loopback optical waveguides are arranged in the network loopback optical interfaces and the at least one spare loopback optical interface so that each subset of the shuffle optical waveguides that is operatively coupled to one of the server ports is cross-connected through the loopback test system to another subset of the shuffle optical waveguides that is operatively coupled to another of the server ports, with at least one of the cross-connections passing through the at least one spare loopback optical interface and two of the network loopback optical interfaces.

10. A method of performing an optical connectivity test on an equipment rack that includes an optical shuffle device and at least one server, wherein the optical shuffle device has a plurality of network-side optical interfaces, at least one spare optical interface, and a plurality shuffle optical waveguides each coupled to one of the network-side optical interfaces and extending at least partially within the optical shuffle device, wherein the plurality of shuffle optical waveguides defines multiple subsets of the shuffle optical waveguides for each of the network-side optical interfaces, and wherein the at least one server includes a plurality of server ports, the method comprising:
operatively coupling each of the server ports to a respective subset of the multiple subsets of the shuffle optical waveguides;
coupling each network-side optical interface and each spare optical interface of the optical shuffle device to a respective loopback optical interface of a loopback test system, wherein the coupling results in the plurality of shuffle optical waveguides and the loopback test system cross-connecting each of the server ports with another one of the server ports, and wherein at least one of the cross-connections passes through the at least one spare optical interface and two network optical interfaces;
transmitting, through the cross-connections established by the plurality of shuffle optical waveguides and the loopback test system, one or more optical signals from each server port in a first subset of the server ports to a respective server port in a second subset of the server ports; and
in response to receiving each of the one or more optical signals transmitted to each of the server ports in the second subset of server ports, determining the equipment rack has passed the optical connectivity test.

11. The method of claim 10, wherein:
each loopback optical interface of some of the loopback optical interfaces is a respective network loopback optical interface;
at least one of the loopback optical interfaces is different than any of the network loopback optical interfaces, and each of the at least one of the loopback optical interfaces is a respective spare loopback optical interface; and
the plurality of loopback optical waveguides comprises:
a plurality of first loopback optical waveguides each having one end operatively coupled to one of the network loopback optical interfaces and another end operatively coupled to another of the network loopback optical interfaces;
a plurality of second loopback optical waveguides each having opposite ends operatively coupled to one of the network loopback optical interfaces that is different than any of the network loopback optical interfaces to which the first loopback optical waveguides are operatively coupled such that the transmitting comprises each second loopback optical waveguide receiving the one or more optical signals through the network loopback optical interface to which the second loopback optical waveguide is operatively coupled and directing the optical signals back to the same network loopback optical interface; and
a plurality of third loopback optical waveguides each having one end operatively coupled to a spare loopback optical interface of the at least one spare loopback optical interface and another end operatively coupled to one of the network loopback optical interfaces to which at least one of second loopback optical waveguides is operatively coupled.

12. The method of claim 11, wherein:
each of the network loopback optical interfaces to which the first loopback optical waveguides are operatively coupled is associated with twenty-four of the first loopback optical waveguides,
each network loopback optical interface to which any of the second loopback optical waveguides are operatively coupled is associated with eight of the second loopback optical waveguides and eight of the third loopback optical waveguides, and
each of the at least one spare loopback optical interface is associated with eight of the third loopback optical waveguides.

13. The method of claim 11, wherein the plurality of loopback optical interfaces includes eight of the network loopback optical interfaces to which the first loopback optical waveguides are operatively coupled, four of the network loopback optical interfaces to which the second loopback optical waveguides are operatively coupled, and four of the spare loopback optical interfaces.

14. The method of any of claims 10-13, wherein:
the loopback test system further includes at least one jumper cable assembly,
each jumper cable assembly of the at least one jumper cable assembly comprises at least some of the first loopback optical waveguides and the network loopback optical interfaces that are operatively coupled to the ends thereof, and
coupling each network-side optical interface of the optical shuffle device to a respective loopback optical interface of the loopback test system further comprises coupling each jumper cable assembly of the at least one jumper cable assembly to a respective pair of the network-side optical interfaces.

15. The method of any of claims 10-14, wherein:
the loopback test system further includes at least one loopback cable assembly,
each loopback cable assembly of the at least one loopback cable assembly includes at least some of the second loopback optical waveguides, at least some of the third loopback optical waveguides, and the loopback optical interfaces that are operatively coupled to the ends of said at least some second loopback optical fibers and said at least some third loopback optical fibers, and
coupling each network-side optical interface and each spare optical interface of the optical shuffle device to a respective loopback optical interface of the loopback test system further comprises coupling each loopback cable assembly of the at least one loopback cable assembly to a respective one of the network-side optical interfaces and to a respective spare optical interface of the at least one spare optical interface.
